Europäisches Patentamt

European Patent Office

Office européen des brevets

(11) Veröffentlichungsnummer: **0 039 786**
**B1**

(12) # EUROPÄISCHE PATENTSCHRIFT

(45) Veröffentlichungstag der Patentschrift:
09.02.83

(21) Anmeldenummer: 81102720.0

(22) Anmeldetag: **10.04.81**

(51) Int. Cl.³: **C 25 D  13/06,** C 09 D  3/80,
C 08 L  33/00, C 08 F  246/00

(54) Verkappte Isocyanatgruppen enthaltende Copolymere und ihre Verwendung für die anodische Elektrotauchlackierung.

(30) Priorität: 08.05.80  DE 3017537

(43) Veröffentlichungstag der Anmeldung:
18.11.81 Patentblatt 81/46

(45) Bekanntmachung des Hinweises auf die Patenterteilung:
09.02.83 Patentblatt 83/6

(84) Benannte Vertragsstaaten:
AT BE DE FR GB IT NL

(56) Entgegenhaltungen:
DE-A-2 460 785
US-A-3 692 746
US-A-3 883 483
US-A-3 939 051

(73) Patentinhaber: **BASF Aktiengesellschaft,
Carl-Bosch-Strasse 38, D-6700 Ludwigshafen (DE)**

(72) Erfinder: **Gimpel, Juergen, Dr., Osloer Weg 4,
D-6700 Ludwigshafen (DE)**
Erfinder: **Feuerherd, Karl-Heinz, Dr., Berner Weg 34,
D-6700 Ludwigshafen (DE)**
Erfinder: **Schenck, Hans-Uwe, Dr., Erlenweg 6,
D-6706 Wachenheim (DE)**

## Verkappte Isocyanatgruppen enthaltende Copolymere und ihre Verwendung
## für die anodische Elektrotauchlackierung

Die Erfindung betrifft Lackbindemittel auf Basis eines Carboxylgruppen, verkappte Isocyanatgruppen, Hydroxyl- und Ethergruppen enthaltenden Copolymerisats und deren Verwendung für Elektrotauchlacke.

Bindemittel, für Elektrotauchlacke auf der Grundlage von Polyethern werden in der DE-B-2 228 642 beschrieben. Epoxidharze auf Bisphenol-A-Basis werden dabei mit Vinylalkoholen, Hydroxyethylvinylthioethern oder Hydroxyacrylaten umgesetzt und diese Produkte dann mit Acrylaten copolymerisiert. Da die so modifizierten Epoxidharze noch Epoxidwerte von 0,08 bis 0,11 aufweisen, ist die Badstabilität der erhaltenen Elektrotauchlacke bei geringem Durchsatz nicht ganz befriedigend.

Bindemittel für Elektrotauchlacke auf der Grundlage von Polyethern werden auch in der US-A-4 075 133 beschrieben. Epoxidharze auf Bisphenol-A-Basis werden dazu mit weiterem Bisphenol A und Allylglycidylethern bzw. nur mit Allylalkohol umgesetzt. Die erhaltenen Allylgruppen tragenden Produkte werden dann mit anderen Monomeren copolymerisiert.

Bindemittel für Elektrotauchlacke auf der Grundlage von Epoxidharzen des Bisphenols A, die Allylgruppen tragen, sind auch in der DE-B-1 947 748 beschrieben. Diese Bindemittel besitzen jedoch außer den Carboxylgruppen keine weiteren vernetzungsaktiven Gruppen. Zur Verbesserung des Verlaufs und des Glanzes der Lackfilme ist es erforderlich, das Molekulargewicht der Copolymere zu erniedrigen. Dies führt jedoch bei den Bindemitteln gemäß der DE-B-1 947 748 zu einer Verschlechterung der mechanischen Eigenschaften und der Beständigkeit gegenüber Chemikalien. Auch ist es nicht sinnvoll, die Copolymere der DE-B-1 947 748 als Alleinbindemittel für ET-Lacke einzusetzen, da die Lackeigenschaften dann unzureichend sind.

Bindemittel für Elektrotauchlacke, die verkapptes Vinylisocyanat als Comonomer enthalten, werden in der DE-A-2 924 786 vorgeschlagen. Der Korrosionsschutz dieser ET-Lacke ist jedoch noch verbesserungsbedürftig.

Der vorliegenden Erfindung lag die Aufgabe zugrunde, Lackbindemittel, insbesondere solche für Elektrotauchlacke aufzuzeigen, die eine definierte Menge an verkappten Isocyanatgruppen enthalten, die direkt an die Kohlenstoffkette des Polymers gebunden sind, wobei im Polymermolekül gegebenenfalls noch andere reaktive Gruppen enthalten sein können, so daß die Polymere als selbst- und fremdvernetzende Bindemittel eingesetzt werden können und gegenüber den in der DE-A-2 924 786 vorgeschlagenen Bindemitteln den Korrosionsschutz zu verbessern.

Überraschenderweise wurde gefunden, daß sich Polymerisate herstellen lassen, die neben dem verkappten Vinylisocyanat die für anionische Elektrotauchlacke erforderliche Menge an Carboxylgruppen enthalten, ohne daß das verkappte Vinylisocyanat unter den Polymerisationsbedingungen zu einem überwiegenden Teil umgelagert und hydrolisiert wird, wie in der Literatur (Die makromol. Chemie, 172 [1973], S. 27−47) beschrieben. Auch der Einbau von Addukten olefinisch ungesättigter Alkohole an Epoxidharz auf Basis Bisphenol A/Epichlorhydrin war trotz der durch die verkappten Vinylisocyanat-Monomeren bedingten niedrigen Polymerisationstemperaturen möglich.

Gegenstand der vorliegenden Erfindung sind Lackbindemittel auf Basis eines Carboxylgruppen, verkappte Isocyanatgruppen, Hydroxyl- und Ethergruppen enthaltenden Copolymerisats, das durch zumindest teilweise Salzbildung mit Ammoniak oder einer organischen Base wasserlöslich oder wasserdispergierbar ist, die dadurch gekennzeichnet sind, daß das Copolymerisat einpolymerisiert enthält:

(A) mindestens eine $\alpha,\beta$-olefinisch ungesättigte Carbonsäure mit 3 bis 5 Kohlenstoffatomen oder einen Halbester einer $\alpha,\beta$-olefinisch ungesättigten 3 bis 5 Kohlenstoffatome enthaltenden Dicarbonsäure,

(B) 10 bis 35 Gew.-% eines mit einem CH-, OH- oder NH-aciden Verkappungsmittel verkappten N(1-alkenyl)-isocyanats,

(C) 20 bis 50 Gew.-% eines Adduktes aus einem Epoxidharz auf der Basis von Bisphenol A und Epichlorhydrin mit einem Molekulargewicht zwischen 380 und 3500 und einem olefinisch ungesättigten, 3 bis 20 Kohlenstoffatome enthaltenden Alkohol,

(D) 5 bis 64 Gew.-% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1000 und 20 000 aufweist, die Komponente (A) in einer solchen Menge einpolymerisiert enthält, daß die Säurezahl des Copolymerisats 35 bis 150 mg KOH/g beträgt und die Summe der unter (A) bis (D) genannten Prozentzahlen 100 ist.

Gegenstand der Erfindung ist außerdem die Verwendung dieser Lackbindemittel als selbstvernetzende Bindemittel oder in Kombination mit einem polyfunktionellen Vernetzungsmittel als fremdvernetzendes Bindemittel für die anodische Elektrotauchlackierung metallischer Gegenstände.

Die erfindungsgemäßen für die anodische Elektrotauchlackierung geeigneten Bindemittel bestehen im wesentlichen aus Copolymeren mit einem mittleren Molekulargewicht zwischen 1000 und 20 000, wobei der Anteil an einpolymerisierter olefinisch ungesättigter Verbindung mit Carboxylgruppen (A) mengenmäßig so ausgewählt ist, daß das Copolymerisat eine Säurezahl zwischen 35 und 150 (mg KOH/g Copolymere) aufweist und 10 bis 35 Gew.-% der Komponente (B) einpolymerisiert sind.

Der daraus hergestellte Elektrotauchlack enthält im allgemeinen 7 bis 20 Gew.-% eines Ammonium- bzw. Aminsalzes des erfindungsgemäßen Copolymerisats.

Die erfindungsgemäßen Lackbindemittel erfüllen die obengenannten Erfordernisse und zeigen insbesondere hinsichtlich Korrosionsschutz und Chemikalienbeständigkeit der damit erhaltenen Überzüge wesentliche Verbesserungen.

Zu den Aufbaukomponenten des erfindungsgemäßen Lackbindemittels ist im einzelnen folgendes auszuführen:

(A) Als Komponente (A) kommen $\alpha,\beta$-olefinisch ungesättigte Mono- und Dicarbonsäuren mit 3 bis 5 Kohlenstoffatomen, wie z. B. Acrylsäure, Methacrylsäure und Maleinsäure, Fumarsäure und Itaconsäure sowie Halbester von $\alpha,\beta$-olefinisch ungesättigten 3 bis 5 Kohlenstoffatome enthaltenden Dicarbonsäuren mit $C_1$- bis $C_8$-Alkanolen, wie die Monoester der Maleinsäure, Fumarsäure und Itaconsäure und deren Mischungen in Frage. Besonders bevorzugt als Komponente (A) sind Acrylsäure und Methacrylsäure.

Komponente (A) ist im erfindungsgemäßen Copolymerisat in solchen Mengen einpolymerisiert, daß dessen Säurezahl-Bereich zwischen 35 und 150, vorzugsweise zwischen 35 und 100 (mg KOH/g Copolymerisat) liegt.

(B) Die Komponente (B) ist ein Addukt aus einem N(1-alkenyl)-isocyanat und einem CH-, OH- oder NH-aciden Verkappungsmittel. Geeignete N(1-alkenyl)-isocyanate sind solche mit 2 bis 4 Kohlenstoffatomen in der Alkenylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol oder t-Amylalkohol, leicht enolisierbare Verbindungen, wie Acetessigester, Acetylaceton, Malonsäurederivate, wie Malonsäurediester mit 1 bis 8 Kohlenstoffatomen in der Alkoholkomponente, Malonsäuredinitril, sekundäre aromatische Amine wie N-Methylanilin, N-Methyltoluidin oder N-Phenyltoluidin, Imide, wie Succinimid und Phthalimid, Lactame wie ε-Caprolactam, δ-Valerolactam oder Laurinlactam, sowie Oxime wie Acetonoxim, Butanonoxim und Cyclohexanonoxim und aromatische Triazole wie Triazabenzol eingesetzt werden. Besonders bevorzugt als Verkappungsmittel der N(1-alkenyl)-isocyanate sind t-Butanol, Cyclohexanol, ε-Caprolactam und Triazabenzol.

Die Herstellung des verkappten N(1-alkenyl)-isocyanats, wie z. B. des Vinylisocyanats kann z. B. nach einer Analogievorschrift in Houben—Weyl, Methoden der organischen Chemie, Band 14/2 (1963), Seiten 61 bis 70, erfolgen. Sie wird vorzugswrise in Gegenwart von Lösungsmittel durchgeführt. Bei der Umsetzung des N(1-alkenyl)-isocyanats (Vinylisocyanats) mit dem Verkappungsmittel werden etwa äquimolare Mengen eingesetzt. Ein Überschuß des Isocyanats ist zu vermeiden, da dies später zu Vernetzungen Anlaß geben könnte.

Komponente (B) ist in einer Menge von 10 bis 35, vorzugsweise 15 bis 25 Gew.-% im erfindungsgemäßen Copolymerisat einpolymerisiert.

(C) Die Komponente (C) ist ein Umsetzungsprodukt aus einem Epoxidharz aus Bisphenol A und Epichlorhydrin mit einem Molekulargewicht zwischen 380 und 3500, die vorzugsweise etwa 2 Epoxidgruppen pro Molekül enthalten, und olefinisch ungesättigten 3 bis 20 Kohlenstoffatome enthaltenden Alkoholen, wie z. B. Allylalkohol, Geraniol, Buten-1-ol-3, Farnesol, Sojaalkohol, Leinölalkohol oder Alkanolallylethern und Alkanolallylthioethern mit 2 bis 6 Kohlenstoffatomen im Alkanolrest wie z. B. Allylhydroxypropylether und Hydroxyethylallylthioether, wobei das Umsetzungsprodukt aus Epoxidharz und olefinisch ungesättigtem Alkohol vorzugsweise epoxidgruppenfrei ist. Ein Molekulargewicht des Epoxidharzes — vor der Umsetzung mit den Alkoholen — zwischen 380 und 1400 ist bevorzugt. Besonders bevorzugt ist das Umsetzungsprodukt eines derartigen Epoxidharzes mit einem mittleren Molekulargewicht von etwa 900 und Allylalkohol oder Buten-1-ol-3.

Komponente (C) ist in einer Menge von 20 bis 50, vorzugsweise 25 bis 50 Gew.-% im erfindungsgemäßen Copolymerisat einpolymerisiert.

(D) Als Komponente (D) kommen andere unter (A) bis (C) nicht genannte copolymerisierbare olefinisch ungesättigte Verbindungen in Betracht, wie Ester der Acryl- und Methacrylsäure mit Monoalkoholen, die 1 bis 18, vorzugsweise 1 bis 8 Kohlenstoffatome aufweisen, wie z. B. Methylacrylat, Ethylacrylat, Butylacrylat, Ethylhexylacrylat und Methylmethacrylat. Des weiteren kommen alle anderen copolymerisierbaren ungesättigten Verbindungen in Frage, insbesondere Vinylester von Carbonsäuren mit 1 bis 10 Kohlenstoffatomen, wie z. B. Vinylacetat, Vinylpropionat und Vinylpivalat, Vinylaromaten, wie z. B. Styrol, Acrylnitril und olefinisch ungesättigte Triglyceride, wie z. B. isomerisiertes Leinöl. Es können auch Mischungen der genannten Monomeren verwendet werden.

Komponente (D) ist im erfindungsgemäßen Copolymerisat in einer Menge von 5 bis 64, vorzugsweise 15 bis 60 Gew.-%, einpolymerisiert.

Die Herstellung der erfindungsgemäßen Copolymeren erfolgt zweckmäßigerweise in polaren, keine OH-Gruppen aufweisenden Lösungsmitteln, wie z. B. Ethern, wie Tetrahydrofuran oder Estern, wie Essigester oder Methylglykolacetat, aromatischen Kohlenwasserstoffen, wie Xylol oder Toluol oder Gemischen dieser Lösungsmittel, in Gegenwart radikalbildender Initiatoren, wie Azobiscarbonsäureamiden, Azobiscarbonsäurenitrilen oder Peroxiden, im allgemeinen bei Temperaturen zwischen 50 und 120°C, vorzugsweise zwischen 60 und 90°C, gegebenenfalls in Gegenwart von Reglern wie t-Dodecylmercaptan oder Diisopropylxanthogendisulfid. Beispiele für besonders bevorzugte Lackbindemittel sind Copolymerisate aus 6 bis 12 Gew.-% Acryl- oder Methacrylsäure, 20 bis 25 Gew.-% mit Caprolactam verkapptem Vinylisocyanat, 25 bis 50 Gew.-% eines Umsetzungsproduktes aus einem Epoxidharz aus Bisphenol A und Epichlorhydrin mit einem mittleren Molekulargewicht von etwa 900 und Allylalkohol und 13 bis 49 Gew.-% der Komponente (D), wie z. B. 2-Ethylhexylacrylat oder Butylacrylat.

Bevorzugt ist ein Äquivalenzverhältnis der reaktiven Wasserstoffatome der Komponente (C) zu den verkappten Isocyanatgruppen der Komponente (B) von etwa 1 : 1.

Die erfindungsgemäßen Copolymerisate sind unvernetzte Produkte mit einem Molgewicht zwischen 1000 und 20 000, vorzugsweise zwischen 2000 und 10 000 (gemessen mit dem Dampfdruckosmometer). Die K-Werte (nach Fikentscher) (3%ig in Aceton) liegen dementsprechend zwischen 15 und 35, vorzugsweise zwischen 16 und 20.

Die erfindungsgemäßen Copolymerisate enthalten freie Carboxylgruppen, verkappte Isocyanatgruppen und gegenüber diesen Gruppen reaktionsfähige Strukturen sowie gegebenenfalls C—C-Doppelbindungen, die beim Einbrennen der Lacküberzüge mit zur Vernetzung beitragen.

Diese Copolymerisate werden erfindungsgemäß als Lackbindemittel verwendet und sind durch zumindest teilweise Salzbildung mit Ammoniak oder organischen Basen wasserlöslich bzw. wasserdispergierbar.

Die Copolymerisate werden dazu zumindest teilweise mit Ammoniak oder einem Amin neutralisiert. Als Neutralisationsmittel können die für Wasserlacke bzw. Elektrotauchlacke üblichen Amine, Diamine oder Ammoniak dienen. Bevorzugt sind Diisopropanolamin und Dimethylethanolamin. Der Neutralisationsgrad für die Anwendung der erfindungsgemäßen Lackbindemittel in wäßrigem Medium liegt im allgemeinen zwischen 30 und 100%.

Außer dem erfindungsgemäßen Bindemittel kann der Lack polyfunktionelle Vernetzungsmittel, wie höhermolekulare Hydroxyl- und/oder Carboxylgruppen aufweisende Polykondensate, Polyaddukte und/oder Polymerisate wie z. B. Aminoplaste oder Phenol-Formaldehyd-Harze sowie Pigmente, wie z. B. Titandioxid, Talkum und Ruß, je nach Anwendungszweck in Mengen von 10 bis 60, vorzugsweise 20 bis 50 Gew.-Teilen, bezogen auf 100 Gew.-Teile Bindemittel enthalten. Darüber hinaus können noch anorganische und organische Buntpigmente in Mengen von bis zu 5 Gew.-Teilen sowie Füllstoffe in Mengen von ebenfalls bis zu 5 Gew.-Teilen enthalten sein. Verlaufsmittel können bis zu 10 Teilen, Wachse zur Erhöhung der Kratzfestigkeit bis zu 10 Teilen und Katalysatoren für die Entkappungsreaktion wie z. B. Dibutylzinndilaurat in Mengen von bis zu 2 Teilen, jeweils bezogen auf 100 Teile Bindemittel enthalten sein.

Die erfindungsgemäßen Lackbindemittel werden insbesondere für die anodische Elektrotauchlackierung verwendet, und zwar als selbstvernetzendes Bindemittel oder auch als fremdvernetzendes Bindemittel.

Mit den erfindungsgemäßen Elektrotauchlacken lassen sich vor allem metallische Gegenstände, z. B. aus Eisen, Stahl und Aluminium beschichten.

Die Herstellung der anionischen Elektrotauchbäder erfolgt wie üblich, beispielsweise wie in W. Machu, Elektrotauchlackierung, S. 163 ff, beschrieben. Der Feststoffgehalt der Elektrotauchbäder liegt im allgemeinen zwischen 8 und 15 Gew.-%, der pH-Wert zwischen 7,2 und 9,5. Die mit dem erfindungsgemäßen Bindemittel erhaltenen Überzüge weisen eine hohe Härte auf, sind sehr elastisch, chemikalienbeständig und besitzen einen guten Korrosionsschutz. Dieses hohe Eigenschaftsniveau der Lacke wird durch die Badalterung nicht negativ beeinflußt.

Die in den Beispielen genannten Teile und Prozente sind, soweit nicht anders angegeben, Gewichtsteile bzw. Gewichtsprozente.

Herstellung der Komponente (B)

(B1) N-Vinylcarbaminsäure-tert.-Butylester

In einem Reaktionsgefäß, versehen mit einem Intensivkühler (mit Kühlsole), Rührer, Thermometer und Zulaufgefäß werden 69 Teile Vinylisocyanat und 70 Teile Ethylacetat vorgelegt. Bei 40°C werden innerhalb von 1 Stunde 74 Teile tert.-Butanol, 73 Teile Ethylacetat und 0,01% Dibutylzinndilaurat zugegeben. Anschließend läßt man noch 10 Stunden bei 40°C nachreagieren. Es entsteht eine hellgelbe klare Lösung. Isocyanatgehalt (verkappt): 14,7%.

### (B2) N-Vinylcarbaminsäure-cyclohexylester

In einem Reaktionsgefäß werden 69 Teile Vinylisocyanat und 89,5 Teile Ethylacetat vorgelegt und auf 40° C aufgeheizt. Dazu wird innerhalb von 1 Stunde eine Mischung aus 110 Teilen Cyclohexanol und 89,5 Teilen Ethylacetat (0,02% Dibutylzinndilaurat als Katalysator) gegeben. Nachreaktionszeit: 2 Stunden bei 40°C. Man erhält eine hellgelbe Lösung, aus der sich beim Abkühlen das Reaktionsprodukt in Form von Kristallen abscheidet. Isocyanat-Gehalt (verkappt): 11,7%.

### (B3) Vinylisocyanat-ε-Caprolactam-Addukt

In einem Reaktionsgefäß werden 113 Teile ε-Caprolactam und 91 Teile Ethylacetat (+0,015% Dibutylzinndilaurat) vorgelegt und auf ca. 50°C aufgeheizt. Dazu wird innerhalb von 1 Stunde eine Mischung aus 69 Teilen Vinylisocyanat und 91 Teilen Ethylacetat zugetropft. Nachreaktionszeit: 5 Stunden. Man erhält eine hellgelbe klare Lösung. Isocyanat-Gehalt (verkappt): 11,5%.

### Herstellung der Komponente (C)

250 Teile eines Epoxidharzes aus Bisphenol A und Epichlorhydrin mit einem mittleren Molekulargewicht von 900 und einem Epoxidwert von 0,2 bis 0,223 und 400 Teile Allylalkohol werden zusammen auf 80°C erhitzt bis eine homogene Lösung entsteht. Man gibt 1,75 Teile Bortrifluorid-Diethyletherat-Lösung, 75 Teile Allylalkohol und 0,1 Teile Hydrochinonmonomethylether hinzu. Nach zweistündigem Erhitzen auf Rückflußtemperatur wird der überschüssige Allylalkohol abdestilliert und das Produkt in Essigsäureethylester aufgenommen. Man erhält eine gelbliche klare Lösung mit einem Epoxidwert von 0,00 und einem Feststoffgehalt von 61%.

### Herstellung der Copolymerisatlösungen

### Polymer 1

In einem mit Rührer, Rückflußkühler und Innenthermometer ausgestatteten Reaktionsgefäß wurden 100 Teile des Zulaufs I vorgelegt. Zulauf I besteht aus 104 Teilen der Addukt-B-2-Lösung, 124 Teilen der Komponente (C), 56 Teilen Ethylhexylacrylat, 4 Teilen 2,2'-Azobis-(2,4-Dimethyl-Valeronitril) und 3 Teilen t-Dodecylmerkaptan. Zulauf II besteht aus 12 Teilen Acrylsäure und 37 Teilen Essigsäureethylester. Die Vorlage wird auf 70°C erhitzt. Zulauf I und II werden innerhalb von 3 Stunden bei 70°C zugegeben. Anschließend wird eine Stunde nachpolymerisiert. Dann werden 0,5% Initiator zudosiert und nachpolymerisiert bis der Umsatz 100% beträgt. Man erhält eine klare Lösung eines Harzes mit einem K-Wert von 18 und dem Feststoffgehalt von 58,2%. Die Säurezahl beträgt 59,7.

### Polymer 2

Wie bei Polymer 1 beschrieben, werden 96 Teile der Addukt-B-3-Lösung (anstelle des Addukts B 2), 109 Teile der Komponente (C), 60 Teile Butylacrylat, 8 Teile Styrol und 14 Teile Methacrylsäure copolymerisiert. Die Polymerlösung hat einen Feststoffgehalt von 61,6%, einen K-Wert von 16,6 und eine Säurezahl von 50,1.

### Polymer 3

Wie bei Polymer 1 beschrieben, werden 64 Teile der Komponente (C), 120 Teile der Addukt-B-2-Lösung, 80 Teile Butylacrylat und 20 Teile Acrylsäure copolymerisiert. Die Polymerlösung hat einen Feststoffgehalt von 50,4%, einen K-Wert von 17,6 und eine Säurezahl von 78,3.

### Polymer 4

Wie bei Polymer 1 beschrieben, werden 82 Teile der Komponente (C), 80 Teile der Addukt-B-3-Lösung, 20 Teile Acrylnitril, 50 Teile Ethylhexylacrylat, 20 Teile isomerisiertes Leinöl (z. B. Ilinol 104) und 20 Teile Acrylsäure copolymerisiert. Die Polymerlösung hat einen Feststoffgehalt von 63,3%, einen K-Wert von 16 und eine Säurezahl von 65,5.

### Vergleichspolymer 1

Wie bei Polymer 1 beschrieben, werden 70 Teile der Addukt-B-3-Lösung, 25 Teile Hydroxypropylacrylat, 30 Teile Ethylhexylacrylat, 4 Teile Styrol und 6 Teile Methacrylsäure copolymerisiert. Die Polymerlösung hat einen Feststoffgehalt von 71%, einen K-Wert von 28 und eine Säurezahl von 36,5.

### Vergleichspolymer 2

Wie bei Polymer 1 beschrieben, werden 56 Teile der Komponente (C), 10 Teile Acrylnitril, 45 Teile Ethylhexylacrylat und 10 Teile Acrylsäure copolymerisiert. Die Polymerlösung hat einen Feststoffgehalt von 53%, einen K-Wert von 20,8 und eine Säurezahl von 73,5.

### Elektrotauch-( = ET-)Lacke

### ET-Lack 1

167,5 Teile der Polymerlösung 1 werden mit 2 Teilen Dibutylzinndilaurat und 6,63 Teilen Dimethylethanolamin versetzt. Mit vollentsalztem Wasser wird eine 10%ige Dispersion hergestellt. Bei einer Abscheidespannung von 200 V werden 2 Minuten lang zinkphosphatierte Stahlbleche anodisch beschichtet. Diese werden mit vollentsalztem Wasser gespült, mit Preßluft trocken geblasen und 30 Minuten bei 220° C eingebrannt.

### ET-Lack 2

117,3 Teile der Polymerlösung 1 und 44 Teile eines handelsüblichen Bisphenol-A-Formaldehydharzes (FG = 68%) werden mit 1,4 Teilen Dibutylzinndilaurat und 5,33 Teilen Dimethylethanolamin versetzt. Es wird eine 10%ige wäßrige Dispersion hergestellt. Bei 100 V werden zinkphosphatierte Stahlbleche anodisch beschichtet, die 30 Minuten lang bei 220° C eingebrannt werden.

### ET-Lack 3

163,3 Teile der Polymerlösung 2 werden mit 19 Teilen einer 50%igen wäßrigen Diisopropanolaminlösung versetzt. Aus der mit vollentsalztem Wasser hergestellten 10%igen Dispersion werden bei 80 V zinkphosphatierte Stahlbleche anodisch beschichtet und 30 Minuten bei 190° C eingebrannt.

### ET-Lack 4

113,6 Teile der Polymerlösung 2 und 44 Teile des Bisphenol-A-Formaldehydharzes von ET-Lack 2 werden mit 13,4 Teilen 50%iger wäßriger Diisopropanolaminlösung versetzt. Aus der mit vollentsalztem Wasser hergestellten 10%igen Dispersion werden bei 150 V zinkphosphatierte Stahlbleche anodisch beschichtet und 30 min bei 190° C eingebrannt.

### ET-Lack 5

198,4 Teile der Polymerlösung 3 werden mit 6,67 Teilen Dimethylethanolamin versetzt. Aus der mit vollentsalztem Wasser hergestellten 10%igen Dispersion werden bei 50 V zinkphosphatierte Stahlbleche anodisch beschichtet und 30 Minuten bei 170° C eingebrannt.

### ET-Lack 6

158,7 Teile der Polymerlösung 3 und 19,4 Teile des Bisphenol-A-Formaldehydharzes von ET-Lack 2 werden mit 6,93 Teilen Dimethylethanolamin versetzt. Aus der mit vollentsalztem Wasser hergestellten 10%igen Dispersion werden bei 150 V zinkphosphatierte Stahlbleche anodisch beschichtet und 30 Minuten bei 170° C eingebrannt.

# 0 039 786

### ET-Lack 7

125 Teile der Polymerlösung 4 werden mit 36,8 Teilen des Bisphenol-A-Formaldehydharzes von ET-Lack 2 und 3 Teilen Dimethylethanolamin versetzt. Aus der mit vollentsalztem Wasser hergestellten 10%igen Dispersion werden bei 140 V zinkphosphatierte Stahlbleche anodisch beschichtet und 30 Minuten bei 180° C eingebrannt.

### ET-Lack 8
### (Vergleichsbeispiel ohne Polyether)

140,8 Teile der Polymerlösung von Vergleichspolymer 1 werden mit 16,7 Teilen 50%iger wäßriger Diisopropanolaminlösung versetzt. Aus der mit vollentsalztem Wasser hergestellten 10%igen Dispersion werden bei 100 V zinkphosphatierte Stahlbleche anodisch beschichtet und 30 Minuten bei 170° C eingebrannt.

### ET-Lack 9
### (Vergleichsbeispiel ohne Isocyanat-Monomer)

188,7 Teile der Polymerlösung von Vergleichspolymer 2 werden mit 8,0 Teilen Dimethylethanolamin versetzt. Aus der mit vollentsalztem Wasser hergestellten 10%igen Dispersion werden bei 250 V zinkphosphatierte Stahlbleche anodisch beschichtet und 30 Minuten bei 170° C eingebrannt.

Die Eigenschaften der mit den Elektrotauchlacken 1 bis 9 erhaltenen Lackierungen sind in der Tabelle zusammengefaßt.

7

Tabelle

(Eigenschaften der Elektrotauchlackierungen)

| | ET-Lack-Nr. | | | | | | | | |
|---|---|---|---|---|---|---|---|---|---|
| | 1 | 2 | 3 | 4 | 5 | 6 | 7 | 8 | 9 |
| Schichtdicke [$\mu$m] | 16 | 15 | 8 | 11 | 11 | 26 | 11 | 30 | 16 |
| Pendelhärte [sec]<br>(DIN 53 157) | 141 | 140 | 143 | 185 | 135 | 135 | 160 | 130 | 61 |
| E-Tiefung [mm]<br>(DIN 53 156) | 10 | 4,3 | 10 | 8,5 | 9,4 | 3,1 | 6,5 | 2 | 9 |
| Acetonbeständigkeit | i O | i O | i O | i O | i O | i O | i O | i O | ni O |
| Korrosionsschutz<br>(DIN 50 021) | 240 h:<br>6 mm | 240 h:<br>9 mm | 168 h:<br>8 mm | 168 h:<br>7 mm | 168 h:<br>8 mm | 168 h:<br>4 mm | 240 h:<br>11 mm | 24 h:<br>8 mm | 168 h:<br>8 mm |

i O  = in Ordnung.
ni O = nicht in Ordnung.

0 039 786

**Patentansprüche**

1. Lackbindemittel auf Basis eines Carboxylgruppen, verkappte Isocyanatgruppen, Hydroxyl- und Ethergruppen enthaltenden Copolymerisats, das durch zumindest teilweise Salzbildung mit Ammoniak oder einer organischen Base wasserlöslich oder wasserdispergierbar ist, dadurch gekennzeichnet, daß das Copolymerisat einpolymerisiert enthält

(A) mindestens eine α,β-olefinisch ungesättigte Carbonsäure mit 3 bis 5 Kohlenstoffatomen oder einen Halbester einer α,β-olefinisch ungesättigten 3 bis 5 Kohlenstoffatome enthaltende Dicarbonsäure,

(B) 10 bis 35 Gew.-% eines mit einem CH-, OH- oder NH-aciden Verkappungsmittel verkappten N(1-alkenyl)-isocyanats,

(C) 20 bis 50 Gew.-% eines Adduktes aus einem Epoxidharz auf der Basis von Bisphenol A und Epichlorhydrin mit einem Molekulargewicht zwischen 380 und 3500 und einem olefinisch ungesättigten, 3 bis 20 Kohlenstoffatome enthaltenden Alkohol,

(D) 5 bis 64 Gew.-% einer oder mehrerer unter (A) bis (C) nicht genannter copolymerisierbarer olefinisch-ungesättigter Verbindungen,

mit der Maßgabe, daß das Copolymerisat ein mittleres Molekulargewicht zwischen 1000 und 20 000 aufweist, die Komponente (A) in einer solchen Menge einpolymerisiert enthält, daß die Säurezahl des Copolymerisats 35 bis 150 mg KOH/g beträgt, und die Summe der unter (A) bis (D) genannten Prozentzahlen 100 ist.

2. Lackbindemittel nach Anspruch 1, dadurch gekennzeichnet, daß das Äquivalenzverhältnis der reaktiven Wasserstoffatome der Komponente (C) zu den verkappten Isocyanatgruppen im Copolymerisat etwa 1 : 1 beträgt.

3. Lackbindemittel nach einem der vorhergehenden Ansprüche, dadurch gekennzeichnet, daß als Komponente (B) ein Addukt aus Vinylisocyanat oder Propenylisocyanat und Cyclohexanol, tert.-Butanol, Triazabenzol oder ε-Caprolactam im Molverhältnis Isocyanat/Verkappungsmittel von 1 : 1 verwendet wird.

4. Lackbindemittel nach einem der vorhergehenden Ansprüche, dadurch gekennzeichnet, daß das Copolymerisat als Komponente (A) Acryl- oder Methacrylsäure, als Komponente (B) mit ε-Caprolactam verkapptes Vinylisocyanat, als Komponente (C) ein Umsetzungsprodukt eines Epoxidharzes aus Bisphenol A und Epichlorhydrin mit einem mittleren Molekulargewicht von etwa 900 und Allylalkohol sowie als Komponente (D) 2-Ethyl-hexylacrylat oder Butyacrylat einpolymerisiert enthält.

5. Verwendung eines Lackbindemittels nach einem der vorhergehenden Ansprüche als selbstvernetzendes Bindemittel für die anodische Elektrotauchlackierung metallischer Gegenstände.

6. Verwendung eines Lackbindemittels nach einem der Ansprüche 1 bis 4 in Kombination mit einem polyfunktionellen Vernetzungsmittel als fremdvernetzendes Bindemittel für die anodische Elektrotauchlackierung metallischer Gegenstände.

7. Verwendung nach Anspruch 6, dadurch gekennzeichnet, daß das polyfunktionelle Vernetzungsmittel ein höhermolekulares Hydroxyl- oder Carboxylgruppen aufweisendes Polykondensat, Polyaddukt oder Polymerisat ist.

8. Verwendung nach Anspruch 6, dadurch gekennzeichnet, daß das polyfunktionelle Vernetzungsmittel ein Aminoplast- oder Phenol-Formaldehyd-Harz ist.


**Claims**

1. A surface-coating binder based on a copolymer which contains carboxyl groups, blocked isocyanate groups, hydroxyl groups and ether groups and which, due to partial or complete salification with ammonia or with an organic base, is water-soluble or water-dispersible, wherein the copolymer contains, as copolymerized units:

(A) at least one α,β-olefinically unsaturated carboxylic acid of 3 to 5 carbon atoms or a half-ester of an α,β-olefinically unsaturated dicarboxylic acid of 3 to 5 carbon atoms,

(B) from 10 to 35% by weight of an N(1-alkenyl) isocyanate blocked with a CH-, OH- or NH-acidic blocking agent,

(C) from 20 to 50% by weight of an adduct of an epoxy resin, based on bisphenol A and epichlorhydrin and having a molecular weight of from 380 to 3,500, with an olefinically unsaturated alcohol of 3 to 20 carbon atoms, and

(D) from 5 to 64% by weight of one or more copolymerizable olefinically unsaturated compounds not already mentioned under (A) to (C)

with the provisos that the copolymer has a mean molecular weight of from 1,000 to 20,000 and contains component (A), as copolymerized units, in an amount such that the acid number of the copolymer is from 35 to 150 mg of KOH/g, and that the sum of the percentages of (A) to (D) is 100.

2. A surface-coating binder as claimed in claim 1, wherein the ratio of the number of equivalents of reactive hydrogens of component (C) to the number of equivalents of blocked isocyanate groups in the copolymer is about 1 : 1.

3. A surface-coating binder as claimed in claim 1, wherein component (B) is an adduct of vinyl isocyanate or propenyl isocyanate and cyclohexanol, tert.-butanol, triazabenzene or ε-caprolactam, in the molar ratio of isocyanate to blocking agent of 1 : 1.

4. Surface-coating binder as claimed in one of the preceding claims, wherein the copolymer contains acrylic acid or methacrylic acid as component (A), vinyl isocyanate blocked with caprolactam as component (B), a reaction product of an epoxy resin, obtained from bisphenol A and epichlorhydrin and having a mean molecular weight of about 900, with allyl alcohol, as component (C), and 2-ethylhexyl acrylate or butyl acrylate as component (D), the said components being present as copolymerized units.

5. The use of a surface-coating binder as claimed in one of the preceding claims as a self-crosslinking binder for the anodic electrocoating of metallic articles.

6. The use of a surface-coating binder as claimed in one of claims 1 to 4 in combination with a polyfunctional crosslinking agent for the anodic electrocoating of metallic articles.

7. The use as claimed in claim 6, wherein the polyfunctional crosslinking agent is a hydroxyl-containing or carboxyl-containing polycondensate, polyadduct or polymer, of relatively high molecular weight.

8. The use as claimed in claim 6, wherein the polyfunctional crosslinking agent is an aminoplast or a phenol-formaldehyde resin.

## Revendications

1. Liant pour peintures à base d'un copolymérisat contenant des groupes carboxyle, des groupes isocyanate masqués, des groupes hydroxyle et éther, qui est soluble dans l'eau ou dispersable dans l'eau grâce à une salification au moins partielle avec de l'ammoniac ou une base organique, caractérisé par le fait que le copolymérisat contient copolymérisés:

(A) au moins un acide carboxylique à insaturation oléfinique en α, β, ayant 3 à 5 atomes de carbone ou un hémiester d'un diacide carboxylique, à insaturation oléfinique en α, β, contenant 3 à 5 atomes de carbone;

(B) 10 à 35% en poids d'un N(1-alcényl)-isocyanate, masqué avec un agent de masquage CH-, OH- ou NH-acide;

(C) 20 à 50% en poids d'un produit d'addition d'une résine époxy à base de bisphénol A et d'épichlorhydrine, ayant un poids moléculaire compris entre 380 et 3500 et d'un alcool, à insaturation oléfinique, ayant 3 à 20 atomes de carbone;

(D) 5 à 64% en poids d'un ou plusieurs composés, à insaturation oléfinique, copolymérisable, non cités sous (A) à (C),

sous réserve que le copolymérisat ait un poids moléculaire moyen compris entre 1000 et 20 000, contienne, copolymérisé, le composant (A) en quantité telle que l'indice d'acide du copolymérisat soit de 35 à 150 mg KOH/g et que la somme des pourcentages indiqués sous (A) à (D) soit égale à 100.

2. Liant pour peintures selon la revendication 1, caractérisé par le fait que le rapport en équivalence des atomes d'hydrogène réactifs du composant (C) aux groupes isocyanate masqués est, dans le copolymérisat, d'environ 1/1.

3. Liant pour peintures selon l'une des revendications précédentes, caractérisé par le fait qu'on utilise, comme composant (B), un produit d'addition d'isocyanate de vinyle ou d'isocyanate de propényle et de cyclohéxanol, tert-butanol, triazabenzéne ou ε-caprolactame, en rapport molaire, isocyanate/agent de masquage, de 1/1.

4. Liant pour peintures selon l'une des revendications précédentes, caractérisé par le fait que le copolymérisat contient, copolymérisé, comme composant (A), de l'acide acryl- ou méthacrylique, comme composant (B), de l'isocyanate de vinyle masqué avec de l'ε-caprolactame, comme composant (C), un produit de réaction d'une résine époxy de bisphénol A et d'épichlorhydrine ayant un poids moléculaire moyen d'environ 900 et d'alcool allylique, ainsi que, comme composant (D), du 2-éthyl-héxyl-acrylate ou butylacrylate.

5. Utilisation d'un liant pour peintures selon l'une des revendications précédentes comme liant auto-réticulant pour peinture par l'électrodéposition anodique d'objets métalliques.

6. Utilisation d'un liant pour peintures selon l'une des revendications 1 à 4 en combinaison avec un réticulant polyfonctionnel, comme liant réticulant sous action extérieure, pour la peinture par électrodéposition anodique d'objets métalliques.

7. Utilisation selon la revendication 6, caractérisée par le fait que le réticulant polyfonctionnel est un polycondensat, un produit de polyaddition ou un polymérisat comportant des groupes hydroxyle ou carboxyle de poids moléculaire élevé.

8. Utilisation selon la revendication 6, caractérisée par le fait que le réticulant polyfonctionnel est une résine aminoplaste ou phénol-formaldéhyde.